# EUROPEAN PATENT SPECIFICATION

(11) **EP 2 798 715 B1**
(45) Date of publication and mention of the grant of the patent: **19.10.2016**
(21) Application number: 12861528.3
(22) Date of filing: 04.12.2012
(51) Int. Cl.: H02H 7/18, H01M 10/42, H02J 7/00

(54) **BATTERY PROTECTION CHIP AND DEVICE FOR CONTROLLING BALANCE OF BATTERY PROTECTION CHIPS**
BATTERIESCHUTZ-CHIP UND VORRICHTUNG ZUR STEUERUNG DER BALANCE VON BATTERIESCHUTZ-CHIPS
PUCE DE PROTECTION DE BATTERIE, ET DISPOSITIF DE COMMANDE D'ÉQUILIBRE DE PUCES DE PROTECTION DE BATTERIE

(30) Priority: 29.12.2011 CN 201110453861
(43) Date of publication of application: 05.11.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: WANG, Xiaoping, Shenzhen Guangdong 518118 (CN); TU, Zailin, Shenzhen Guangdong 518118 (CN); BAI, Qinggang, Shenzhen Guangdong 518118 (CN)
(74) Representative: m patent group
(86) International application number: PCT/CN2012/085877
(87) International publication number: WO 2013/097584

(56) References cited:
- CN-A- 101 399 440
- CN-A- 101 399 440
- CN-A- 101 800 433
- CN-A- 102 122 812
- CN-A- 102 684 165
- CN-Y- 201 341 019

## Description

### TECHNICAL FIELD

The present disclosure relates generally to a method for controlling a balance of battery protection chips, and more particularly, to a battery protection chip and a device for controlling a balance of battery protection chips.

### BACKGROUND

Voltages of batteries in a multi-battery protection integrated circuit or a multi-battery related integrated circuit are generally different, in which the multi-battery protection integrated circuit comprises a plurality of battery protection chips. In order to prolong a service life of the batteries and to control the batteries in cascade to work in a predetermined state, a device for controlling a balance of battery protection chips is needed.

The traditional device for controlling the balance of battery protection chips uses four terminals (ports), which may increase packaging cost and decrease a device performance. In addition, a layout complexity on an external Printed Circuit Board (PCB) may be increased and there may be higher requirements on hardware.

CN10180433 discloses a protective chip arrangement and method to prevent overcharge of a lithium battery.

### SUMMARY

According to an embodiment of the present disclosure, a device for controlling a balance of battery protection chips, each battery protection chip protecting a battery pack with a plurality of batteries, the device comprises a plurality of battery protection chips connected in series, in which each of the battery protection chips has a first end and a second end, the first end of a first battery protection chip is connected to the second end of a second battery protection chip, the second end of the first battery protection chips is connected to the first end of a third battery protection chip, when a voltage of at least one battery in a battery pack protected by one battery protection chip of the plurality of battery protection chips does not reach a balance threshold, a strong pull up signal is output from the first end of the one battery protection chip and a strong pull down signal is output from the second end of the one battery protection chip; when voltages of the plurality of batteries in the battery pack protected by the one battery protection chip of the plurality of battery protection chips reach the balance threshold, a weak pull down signal is output from the first end of the one battery protection chips and a weak pull up signal is output from the second end of the one battery protection chips; when the strong pull down signal is output from the second end of the second battery protection chip and the weak pull down signal is output from the first end of the first battery protection chip, the weak pull down signal from the first end of the first battery protection chip is forced to become the strong pull up signal; when the strong pull up signal is output from the first end of the third battery protection chip and the weak pull up signal is output from the second end of the first battery protection chip, the weak pull up signal from the second end of the first battery protection chip is forced to become the strong pull down signal; and when the weak pull up signal is output from the second end of the second battery protection chip and the weak pull down signal is output from the first end of the first battery protection chip, the weak pull up signal from the second end of the second battery protection is forced to become the strong pull down signal.The device for controlling the balance of battery protection chips according to an embodiment of the present disclosure comprises the battery protection chips each of which only has two ends, which may reduce a complexity of packaging battery protection chips as well as reduce packaging cost. In addition, as external ends of the packaged battery protection chip according to the present disclosure are less, it may simplify a connection with other devices such as other battery protection chips, and facilitate a layout on an external PCB.

According to another embodiment of the present disclosure, a battery protection chip for protecting a battery pack with a plurality of batteries comprises: a first end, configured to output a strong pull up signal when a voltage of at least one battery in a battery pack protected does not reach a balance threshold, and to output a weak pull down signal when voltages of the plurality of batteries in the battery pack protected reach the balance threshold; and a second end, configured to output a strong pull down signal when a voltage of at least one battery in a battery pack protected does not reach a balance threshold, and to output a weak pull up signal when voltages of the plurality of batteries in the battery pack protected reach the balance threshold, when the strong pull down signal is connected to the first end and the weak pull down signal is output from the first end, the weak pull down signal from the first end is forced to become the strong pull up signal; when the strong pull up signal is connected to the second end and the weak pull up signal is output from the second end, the weak pull up signal from the second end is forced to become the strong pull down signal; and when the weak pull up signal is output from the second end of the second battery protection chip and the weak pull down signal is output from the first end of the first battery protection chip, the weak pull up signal from the second end of the second battery protection is forced to become the strong pull down signal.

The battery protection chip according to an embodiment of the present disclosure only has two ends, which may reduce a complexity of packaging battery protection chips as well as reduce packaging cost. In addition, as external ends of the packaged battery protection chip according to the present disclosure are less, it may simplify a connection with other devices such as other battery protection chips, and facilitate a layout on an external PCB.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions made with reference the accompanying drawings, in which:
FIG. 1 is a block diagram showing a device for controlling a balance of battery protection chips according to an embodiment of the present disclosure;
FIG. 2 is a circuit schematic diagram showing a first module of a battery protection chip according to an embodiment of the present disclosure;
FIG. 3 is a circuit diagram showing a second module of a battery protection chip according to an embodiment of the present disclosure;
FIG. 4 is a circuit diagram showing a balance determining module of a battery protection chip according to an embodiment of the present disclosure;
FIG. 5 is a schematic diagram showing a delay of signals input into the balance determining module according to an embodiment of the present disclosure; and
FIG.6 is a schematic diagram showing a logic state of battery protection chips according to an embodiment of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

In one embodiment of the present disclosure, the device for controlling a balance of battery protection chips comprises a plurality of battery protection chips connected in series, in which each of the battery protection chips has a first end and a second end, the first end of a first battery protection chip is connected to the second end of a second battery protection chip, the second end of the first battery protection chip is connected to the first end of a third battery protection chip, when a voltage of at least one battery in a battery pack protected by one battery protection chip of the plurality of battery protection chips does not reach a balance threshold, a strong pull up signal is output from the first end of the one battery protection chip and a strong pull down signal is output from the second end of the one battery protection chip; when voltages of all batteries in the battery pack protected by the one battery protection chip of the plurality of battery protection chips reach the balance threshold, a weak pull down signal is output from the first end of the one battery protection chip and a weak pull up signal is output from the second end of the one battery protection chip; when the strong pull down signal is output from the second end of the second battery protection chip and the weak pull down signal is output from the first end of the first battery protection chip, the weak pull down signal from the first end of the first battery protection chip is forced to become the strong pull up signal; when the strong pull up signal is output from the first end of the third battery protection chip and the weak pull up signal is output from the second end of the first battery protection chip, the weak pull up signal from the second end of the first battery protection chip is forced to become the strong pull down signal; and when the weak pull up signal is output from the second end of the second battery protection chip and the weak pull down signal is output from the first end of the first battery protection chip, the weak pull up signal from the second end of the second battery protection is forced to become the strong pull down signal.

Herein, the strong pull up signal means that the voltage of the first end is pulled up to a total voltage VCC of the batteries; the weak pull down signal means that the voltage of the first end is pulled down to a first low level; the strong pull down signal means that the voltage of the second end is pulled down to a second low level; the weak pull up signal means that the voltage of the second end is pulled up to a high level.

Because each battery protection chip in the device for controlling a balance of battery protection chips according to an embodiment of the present disclosure only has two ends, it may reduce a complexity of packaging battery protection chips as well as reduce packaging cost. In addition, as external ends of the packaged battery protection chip according to the present disclosure are less, it may simplify a connection with other devices such as other battery protection chips, and facilitate a layout on an external PCB.

In the following, embodiments of the device for controlling a balance of battery protection chips will be described in detail with reference to accompanied drawings.

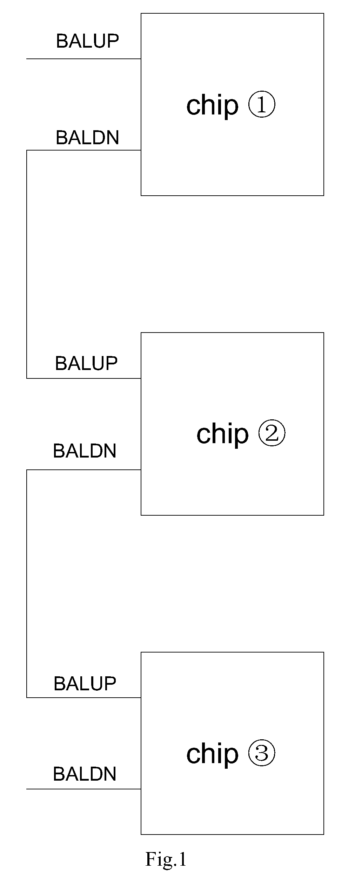

As shown in Fig.1, according to an embodiment of the present disclosure, the device for controlling a balance of battery protection chips comprises three battery protection chips (chip ①, chip ② and chip ③) connected in series. Each battery protection chip has a first end BALUP and a second end BALDN. The first end BALUP of chip ② is connected to the second end BALDN of chip ①, and the second end BALDN of chip ② is connected to the first end BALUP of chip ③. Moreover, in this embodiment, each battery protection chip is a multi-batteries protection chip which controls a battery pack comprising a plurality of batteries.

When a voltage of at least one battery in the battery pack protected by one battery protection chip does not reach a balance threshold, a strong pull up signal is output from the first end BALUP of the battery protection chip and a strong pull down signal is output from the second end BALDN of the battery protection chip; when voltages of all batteries in the battery pack protected by the battery protection chip reach the balance threshold, a weak pull down signal is output from the first end BALUP of the battery protection chip and a weak pull up signal is output from the second end BALDN of the battery protection chip.

Furthermore, when the strong pull down signal is output from the second end BALDN of chip ① and the weak pull down signal is output from the first end BALUP of chip ②, the weak pull down signal from the first end BALUP of chip ② is forced to become the strong pull up signal; when the strong pull up signal is output from the first end BALUP of chip ③ and the weak pull up signal is output from the second end BALDN of chip ②, the weak pull up signal from the second end BALDN of chip ② is forced to become the strong pull down signal; and when the weak pull up signal is output from the second end BALDN of chip ① and the weak pull down signal is output from the first end BALUP of chip ②, the weak pull up signal from the second end BALDN of the chip ① is forced to become the strong pull down signal.

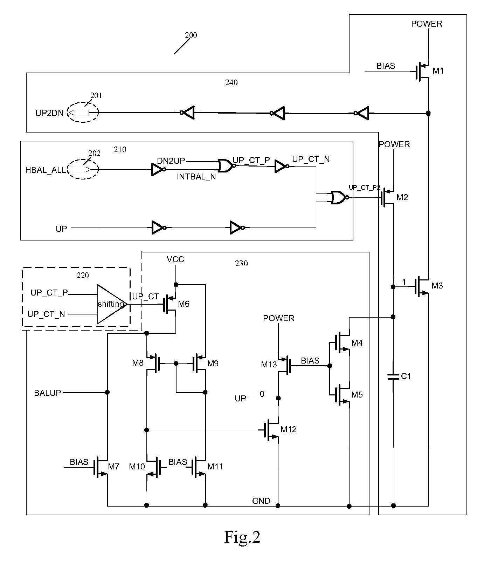

In some embodiments, each battery protection chip determines whether to start an in-pack balance based on voltages of batteries in the pack protected, and determines whether to start an inter-pack balance based on signals from the first end BALUP and the second end BALDN thereof. The details will be described hereinafter with reference to Figs 2-6.

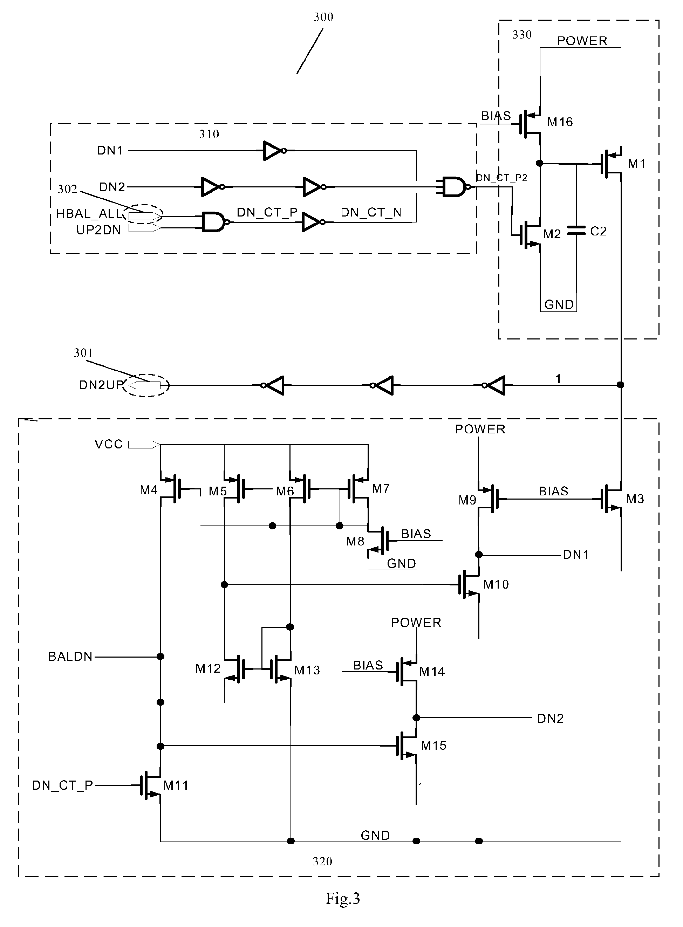

FIG. 2 is a circuit schematic diagram showing a first module of a battery protection chip according to an embodiment of the present disclosure and FIG. 3 is a circuit diagram showing a second module of a battery protection chip according to an embodiment of the present disclosure.

Referring to Figs. 2 and 3, according to an embodiment of the present disclosure, each battery protection chip may comprise a first module 200 and a second module 300. The first module 200 sends a first control signal UP2DN from a first control end 201 to the second module 300, and the second module 300 sends a second control signal DN2UP from a second control end 301 to the first module 200.

Furthermore, the first module 200 has the first end BALUP and a balance signal end 202. The balance signal end 202 is configured to receive a balance signal HBAL_ALL. When voltages of all batteries in the battery pack protected by the battery protection chip reach the balance threshold, the balance signal HBAL_ALL is a high level signal; when a voltage of at least one battery in the battery pack protected by the battery protection chip does not reach the balance threshold, the balance signal HBAL_ALL is a low level signal. When the balance signal end 202 receives the balance signal HBAL_ALL as the low level signal, the first module 200 controls the first end BALUP to output the strong pull up signal based on the second control signal DN2UP; and when the balance signal end 202 receives the balance signal HBAL_ALL as the high level signal, the first module 200 controls the first end BALUP to output the weak pull down signal and controls the first control end 201 to output the first control signal UP2DN based on the second control signal DN2UP.

The second module 300 has the second end BALDN and the balance signal end 202 respectively. When the balance signal end 202 receives the balance signal HBAL_ALL as the low level signal, the second module 300 controls the second end BALDN to output the strong pull down signal based on the first control signal UP2DN; and when the balance signal end 202 receives the balance signal HBAL_ALL as the high level signal, the second module 300 controls the second end BALDN to output the weak pull up signal and to controls the second control end 301 to output the second control signal DN2UP based on the first control signal UP2DN, in which the first control signal UP2DN has a different state than the second control signal DN2UP.

Referring to Fig. 2, in one embodiment, the first module 200 may comprise a first determining unit 210, a level shifting unit 220, a pull-up control unit 230 and a first control unit 240. The first determining unit 210 is configured to generate a first determining signal UP-CT-P based on the second control signal DN2UP and the balance signal HBAL_ALL. The level shifting unit 220 is configured to generate a level shifting signal UP_CT based on the first determining signal UP-CT-P. The pull-up control unit 230 is configured to generate a pull up signal and a third control signal UP based on the level shifting signal UP_CT, in which the pull up signal has a different state than the third control signal UP and the first determining unit 210 is further configured to generate a second determining signal UP_CT_P2 based on the third control signal UP and the first determining signal UP_CT_P. The first control unit 240 is configured to generate the first control signal UP2DN based on the second determining signal UP_CT_P2.

Referring to Fig.3, in one embodiment, the second module 300 may comprise a second determining unit 310, a pull-down control unit 320 and a second control unit 330. The second determining unit 310 is configured to generate a third determining signal DN_CT_P based on the first control signal UP2DN and the balance signal HBAL_ALL. The pull-down control unit 320 is configured to generate a pull down signal, a fourth control signal DN1 and a fifth control signal DN2 based on the third determining signal DN_CT_P, and the second determining unit 310 is further configured to generate a fourth determining signal DN_CT_P2 based on the fourth control signal DN1, the fifth control signal DN2 and the third determining signal DN_CT_P. The second control unit 330 is configured to generate the second control signal DN2UP based on the fourth determining signal DN_CT_P2.

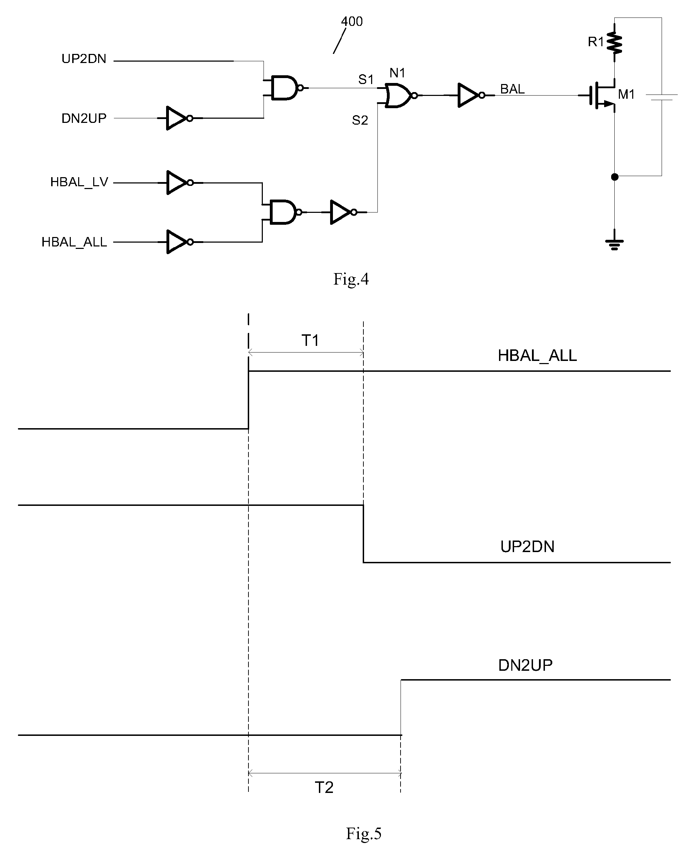

FIG. 4 is a circuit diagram showing a balance determining module of a battery protection chip according to an embodiment of the present disclosure. Referring to Fig. 4, in some embodiments, the battery protection chip may further comprise a balance determining module 400. The balance determining module 400 is connected to the first control end 201, the second control end 301 and the balance signal end 202 respectively, and is configured to determine whether to start the in-pack balance based on the voltages of the batteries in the battery pack protected by the battery protection chip, and to determine whether to start the inter-pack balance based on the first control signal UP2DN and the second control signal DN2UP.

In the following, a working process of the first module 200, the second module 300 of each battery protection chip will be described in detail with reference to Figs. 2-3. In Figs. 2 and 3, VCC is a total voltage of the batteries in the pack, which is typically 10∼20V, POWEWR is an internal logic power of the battery protection chip, which is typically 4V, GND is a ground of the battery protection chip, and BIAS is a bias voltage.

First, the working process of the first module 200 and the second module 300 when the balance signal HBAL_ALL is the low level signal will be described in detail.

Referring to Fig.2, when the balance signal HBAL_ALL is the low level signal, it becomes a high level signal INTBAL_N after passing through an inverter, and the second control signal DN2UP is a low level signal. The first determining signal UP_CT_P obtained after the second control signal DN2UP and the high level signal INTBAL_N pass through a NOR gate is a low level signal. Then the first determining signal UP_CT_P is input into the level shifting unit 220 to obtain the level shifting signal UP_CT as a low level signal, and M6 is turned on. Thus the voltage of the first end BALUP is pulled up to VCC (i.e. the first end BALUP outputs the strong pull up signal), and M8 is turned on. As the pull up ability of M8 is stronger than M10, the drain level of M8 (i.e. the gate level of M12) is a high level and M12 is turned on. Thus the third control signal UP is pulled down to GND. Then after the third control signal UP passes through two inverters, a low level signal is obtained, which is input into a NOR gate together with the signal UP_CT_N to get a second determining signal UP_CT_P2 at a low level. The low level signal UP_CT_P2 makes M2 turn on and makes the gate level of M3 be a high level, and then M3 is turned on. The drain of M3 outputs a low level signal which passes through three inverters to get a first control signal UP2DN at a high level. The first control signal UP2DN is input into the second module 300.

Referring to Fig.3, when the balance signal HBAL_ALL is a low level signal, the first control signal UP2DN is a high level signal. The third determining signal DN_CT_P obtained after the balance signal HBAL_ALL and the first control signal UP2DN pass through a NAND gate is a high level signal. Then the third determining signal DN_CT_P is input into the gate of M11 to make M11 turn on. Thus the voltage of the second end BALDN is pulled down to a low level (i.e. the second end BALDN outputs the strong pull down signal), and M12 is turned on. As the pull up ability of M5 is stronger than the pull down ability of M12, the drain level of M12 (i.e. the gate level of M10) is the high level and M10 is turned on. Thus the fourth control signal DN1 is pulled down to GND, M15 is turned off, and the fifth control signal DN2 is pulled up to the high level signal. A high level signal is obtained after the fourth control signal DN1 passes through one inverter, a high level signal is obtained after the fifth control signal DN2 passes through two inverters, and the output signal obtained after the balance signal HBAL_ALL and the first control signal UP2DN pass through a NAND gate and an inverter is a low level signal. Thus the fourth determining signal DN_CT_P2 obtained after the fourth control signal DN1, the fifth control signal DN2 and the signal DN_CT_N pass through a NAND gate is a high level signal, i.e. the gate level of M2 is the high level, and M2 is turned on. Thus the gate level of M1 is the low level and M1 is turned on. The drain of M1 outputs a high level signal which passes through three inverters to get a second control signal DN2UP at a low level. The second control signal DN2UP is input into the first module 200.

Then, the working process of the first module 200 and the second module 300 when the balance signal HBAL_ALL is the high level signal will be described in detail.

Referring to Fig.2 again, when the balance signal HBAL_ALL is a high level signal, it becomes a low level signal INTBAL_N after passes through one inverter, and the second control signal DN2UP is a low level signal. Thus the first determining signal UP_CT_P obtained after the second control signal DN2UP and the low level signal INTBAL_N pass through a NOR gate is a high level signal. Then the first determining signal UP_CT_P is input into the level shifting unit 220 to obtain the level shifting signal UP_CT as a high level signal, and M6 is turned off. Thus the voltage of the first end BALUP is pulled down to a low level (i.e. the first end BALUP outputs the weak pull down signal) and M8 is turned off. The drain level of M8 (i.e. the gate level of M12) is a low level and M12 is turned off. Thus the third control signal UP is pulled up to the high level signal. Then after the third control signal UP passes through two inverters, a high level signal is obtained, which is input into a NOR gate together with the signal UP_CT_N to get a second determining signal UP_CT_P2 at a low level. The low level signal UP_CT_P2 makes M2 turn on and makes the gate level of M3 be a high level, and then M3 is turned on. As the pull down ability of M3 is stronger than M1, the drain of M3 outputs a low level signal which passes through three inverters to get a first control signal UP2DN at a high level. The first control signal UP2DN is input into the second module 300.

Referring to Fig.3 again, when the balance signal HBAL_ALL is a high level signal, the first control signal UP2DN is a high level signal. The third determining signal DN_CT_P obtained after the balance signal HBAL_ALL and the first control signal UP2DN pass through a NAND gate is a low level signal. Then the third determining signal DN_CT_P is input into the gate of M11 to make M11 turn off. Thus the voltage of the second end BALDN is pulled up to a high level (i.e. the second end BALDN outputs the weak pull up signal) and M12 is turned off. The drain level of M12 (i.e. the gate level of M10) is the high level and M10 is turned on. Thus the fourth control signal DN1 is pulled down to a low level signal, and the gate level of M15 is a high level. Then M15 is turned on, the fifth control signal DN2 is pulled down to the low level signal. A high level signal is obtained after the fourth control signal DN1 passes through one inverter, a low level signal is obtained after the fifth control signal DN2 passes through two inverters, and the output signal obtained after the balance signal and the first control signal pass through a NAND gate and an inverter is a high level signal. Thus the fourth determining signal DN_CT_P2 obtained after the fourth control signal DN1, the fifth control signal DN2 and the signal DN_CT_N pass through a NAND gate is a high level signal, i.e. the gate level of M2 is the high level, and M2 is turned on. Thus the gate level of M1 is the low level, and M1 is turned on. The drain of M1 outputs a high level signal which passes through three inverters to get a second control signal DN2UP at a low level. The second control signal DN2UP is input into the first module 200.

From the above description, it should be understood that with regard to each battery protection chip, when the balance signal HBAL_ALL is the low level signal, the first end BALUP outputs the strong pull up signal, the second end BALDN outputs the strong pull down signal, the third control signal UP is the low level signal, the fourth control signal DN1 is the low level signal, the fifth control signal DN2 is the high level signal, and the first control signal UP2DN is the high level signal; when the balance signal HBAL_ALL is the high level signal, the first end BALUP outputs the weak pull down signal, the second end BALDN outputs the weak pull up signal, the third control signal UP is the high level signal, the fourth control signal DN1 is the low level signal, the fifth control signal DN2 is the low level signal and the second control signal DN2UP is the low level signal.

Further, it should also be understood that with regard to each protection chip, the states of the first end BALUP and the second end BALDN are controlled by the balance signal HBAL_ALL. The first end BALUP has two states of strong pull up and weak pull down, and the second end BALDN has two states of strong pull down and weak pull up.

Referring to Fig.1, there are four connection conditions: (a) when the strong pull down signal output from the second end BALDN of chip ① is connected to the strong pull up signal output from the first end BALUP of chip ②, both the states of the second end BALDN of chip ① and the first end BALUP of chip ② keep unchanged; (b) when the strong pull down signal from the second end BALDN of chip ① is connected to the weak pull down signal from the first end BALUP of chip ②, the state of the second end BALDN of chip ① keeps unchanged, but the weak pull down signal from the first end BALUP of chip ② is forced to become the strong pull up signal; (c) when the weak pull up signal from the second end BALDN of chip ① is connected to the strong pull up signal from the first end BALUP of chip ②, the state of the first end BALUP of chip ② keeps unchanged, but the weak pull up signal of the second end BALDN of chip ① is forced to become the strong pull down signal; (d) when the weak pull up signal from the second end BALDN of chip ① is connected to the weak pull down signal from the first end BALUP of chip ②, the state of the first end BALUP of chip ② keeps unchanged, but the weak pull up signal from the second end BALDN of chip ① is forced to become the strong pull down signal.

According to embodiments of the present disclosure, a weak signal will be forced to become a strong signal under the action of another strong signal. For simplicity, the explanation of (b) and (c) will not be described in detail. With respect to the condition (d), referring to Figs. 2 and 3, when the weak pull up signal is output from the second end BALDN and the weak pull down signal is output from the first end BALUP, M4 is turned on but M11 is turned off, M6 is turned off but M7 is turned on. Since sizes of MOSFETs in M4 and M7 are predetermined to be the same, but the number of MOSFETs in M7 may be configured to be larger than that of MOSFETs in M4 (e.g. M7 has thirteen MOSFES but M4 only has three MOSFETS), the pull down ability of M7 is stronger than the pull up ability of M4 and the voltage of the second end BALDN is pulled down to a value lower than ground (i.e. the weak pull up signal is forced to become the strong pull down signal).

In some embodiments, in order to avoid logic errors, delay capacitors C1 and C2 may be added to the first module 200 and 300 respectively, which make the first control signal UP2DN and the second control signal DN2UP have a certain delay T1 and T2 respectively when they change, as shown in Fig.5, which is a schematic diagram showing a delay of signals input into the balance determining module according to an embodiment of the present disclosure.

Next, the working process of the balance determining module 400 of each battery protection chip will be described in detail with reference to Fig.4.

As shown in Fig.4, the signal HBAL_LV is the output signal from a comparator (not shown) which compares the voltage of each battery with the balance threshold. When the voltage of the battery is below the balance threshold, the signal HBAL_LV is the high level signal; and when the voltage of the battery is above the balance threshold, the signal HBAL_LV is the low level signal. Moreover, as described above, when the voltage of at least one battery in the battery pack protected by the battery protection chip does not reach the balance threshold, the balance signal HBAL_ALL is the low level signal, the first control signal UP2DN is the high level signal, and the second control signal DN2UP is the low level signal. Thus, the signal S1 input into the NOR gate N1 is the low level signal, and the balance control signal BAL is determined by the voltage of the battery. Further, when the balance signal HBAL_ALL is the high level signal, the signal HBAL_LV is the low level signal. Thus, the signal S2 input into the NOR gate N1 is the low level signal, and the balance control signal BAL is determined by the first control signal UP2DN and the second control signal DN2UP. The states of each signal are shown in the following table, in which "0" represents the low level signal, "1" represents the high level signal:

| HBAL_ALL | HBAL_LV | UP2DN | DN2UP | BAL |
|---|---|---|---|---|
| 0 | 1 | 1 | 0 | 0 |
| 0 | 0 | 1 | 0 | 1 |
| 1 | 0 | 0 | 0 | 1 |
| 1 | 0 | 0 | 1 | 1 |
| 1 | 0 | 1 | 0 | 0 |
| 1 | 0 | 1 | 1 | 1 |

When the balance control signal BAL is the low level signal, M1 is turned off and the balance is not started; when the balance control signal BAL is the high level signal, M1 is turned on and the in-pack balance is started, i.e. a discharging circuit is formed with M1 and a resistance R1, which may discharge the voltage of the battery to a value lower than the balance threshold.

In the following, the starting state of the in-pack balance and the inter-pack balance will be described in detail with reference to the embodiment shown in Fig.1. With regard to the three battery protection chips in Fig.1, there are eight states as shown in the following table:

| HBAL_ALL of chip ① | HBAL_ALL of chip ② | HBAL_ALL of chip ③ | state |
|---|---|---|---|
| 0 | 0 | 0 | A |
| 0 | 0 | 1 | B |
| 0 | 1 | 0 | C |
| 0 | 1 | 1 | D |
| 1 | 0 | 0 | E |
| 1 | 0 | 1 | F |
| 1 | 1 | 0 | G |

1. in state A, all balance signals HBAL_ALL of chips ①,② and③ are the low level signals, all the first ends BALUP of chips ①, ② and③ output the strong pull up signals, and all the second ends BALDN of chips ①,② and ③ output the strong pull down signals. Furthermore, as all the logic states of chips ①,② and ③keep unchanged, they do not affect each other and do not start the inter-pack balance. Whether to start the in-pack balance only depends on the voltage of each battery in the battery pack. Only when the voltage of the battery is higher than the balance threshold, will the in-pack balance be started.
2. in state B, the balance signal HBAL_ALL of chip ③ is the high level signal, but the balance signals HBAL_ALL of chips ① and② are the low level signal. Thus, the first ends BALUP of chips ② and ① output the strong pull up signal, the second ends BALDN of chips ② and ① output the strong pull down signal, but the first end BALUP of chip ③ outputs the weak pull down signal. Therefore, chips ② and ① do not affect each other and the inter-pack balances thereof are not started. But as the strong pull down signal from the second end BALDN of chip ② is connected to the weak pull down signal from the first end BALUP of chip ③, the weak pull down signal from the first end BALUP of chip ③ is forced to become the strong pull up signal, and the first control signal UP2DN of chip ③ is changed to be the low level signal from the high level signal. Thus, the balance control signal BAL of chip ③ is changed to be the high level signal, which starts the inter-pack balance of chip ③ (i.e. all the batteries in the battery pack protected by chip ③ start the balance). In addition, with regard to chips ② and ①, only when the voltage of the battery is higher than the balance threshold, will the in-pack balance be started.
3. in state C, the balance signal HBAL_ALL of chip ② is the high level signal, but the balance signals HBAL_ALL of chip ① and chip ③ are the low level signal. Thus, the first ends BALUP of chips ① and ③ output the strong pull up signal, the second ends BALDN of chips ① and ③ outputs the strong pull down signal, but the first end BALUP of chip ② outputs the weak pull down signal, and the second end BALDN of chip ② outputs the weak pull up signal. Therefore, as the strong pull down signal from the second end BALDN of chip ① is connected to the weak pull down signal from the first end BALUP of chip ② and the strong pull up signal from the first end BALUP of chip ③ is connected to the weak pull up signal from the second end BALDN of chip ②, the weak pull down signal from the first end BALUP of chip ② is forced to become the strong pull up signal, the weak pull up signal from the second end BALDN of chip ② is forced to become the strong pull down signal, and the first control signal UP2DN of chip ② is changed to be the low level signal from the high level signal. Thus, the balance control signal BAL of chip ② is changed to be the high level signal, which starts the inter-pack balance of chip ②. In addition, with regard to chips ③ and ①, only when the voltage of the battery is higher than the balance threshold, will the in-pack balance be started.
   The starting of the inter-pack balance and the in-pack balance in states E and F are similar to that in states B and C respectively. For simplicity, the starting of the inter-pack balance and the in-pack balance in state E and F will not be described in detail.
4. in state D, the balance signal HBAL_ALL of chip ① is the low level signal, but the balance signals HBAL_ALL of chips ② and ③ are the high level signals. Thus, as the strong pull down signal from the second end BALDN of chip ① is connected to the weak pull down signal from the first end BALUP of chip ②, the weak pull down signal from the first end BALUP of chip ② is forced to become the strong pull up signal, the first control signal UP2DN of chip ② is changed to be the low level signal, and then the inter-pack balance of chip ② is started and the strong pull down signal is output from the second end BALDN of chip ②. Then, similarly, the strong pull down signal from the second end of chip ② forces the weak pull up signal from the first end of chip ③ to become the strong pull down signal, the first control signal UP2DN of chip ③ is changed to be the low level signal, and then the inter-pack balance of chip ③ is started. In addition, with regard to chip ①, only when the voltage of the battery is higher than the balance threshold, will the in-pack balance be started.
   The starting of the inter-pack balance and the in-pack balance in state G is similar to that in state D. For simplicity, the starting of the inter-pack balance and the in-pack balance in state G will not be described in detail.
5. in state H, all the balance signals HBAL_ALL of chips ①, ② and ③ are the high level signals, thus all the first ends BALUP of chips ①, ② and ③ output the weak pull down signals, and all the second ends BALDN of chips ①, ② and ③ output the weak pull up signals. As described above, the weak pull down ability of the first end BALUP is much stronger than the weak pull up ability of the second end BALDN, and thus when the weak pull up signal from the second end BALDN is connected to the weak pull down signal from the first end BALUP, the level of the second end BALDN will be pulled down to a value lower than the ground. Referring to Fig.3, when the level of the second end BALDN is lower than the ground, M12 is turned on which makes the gate level of M10 lower than GND. M10 is turned off, and then the fourth control signal DN1 output from M10 is the high level signal which make M15 be turned off. Then the fifth control signal DN2 output from M15 is also the high level signal. After logic processing, the second control signal DN2UP is the low level signal and the first control signal UP2DN is the high level signal, which control the balance control signal BAL to be the low level signal, and thus the balance is not started. Therefore, for state H, the inter-pack balance of chip ① is not started, the inter-pack balance of chip ② is not started either. In addition, as the states of both the ends of chip ③ keep unchanged, the inter-pack balance of chip ③ is not started either.

In conclusion, the starting states of the inter-pack balance of chips ①, ② and ③ are shown in the following table:

| **Chip** ① | **Chip** ② | **Chip** ③ | **Inter-pack balance of chip** ① | **Inter-pack balance of chip** ② | **Inter-pack balance of chip** ③ |
|---|---|---|---|---|---|
| 0 | 0 | 0 | Not started | Not started | Not started |
| 0 | 0 | 1 | Not started | Not started | started |
| 0 | 1 | 0 | Not started | started | Not started |
| 0 | 1 | 1 | Not started | started | started |
| 1 | 0 | 0 | started | Not started | Not started |
| 1 | 0 | 1 | started | Not started | started |
| 1 | 1 | 0 | started | started | Not started |
| 1 | 1 | 1 | Not started | Not started | Not started |

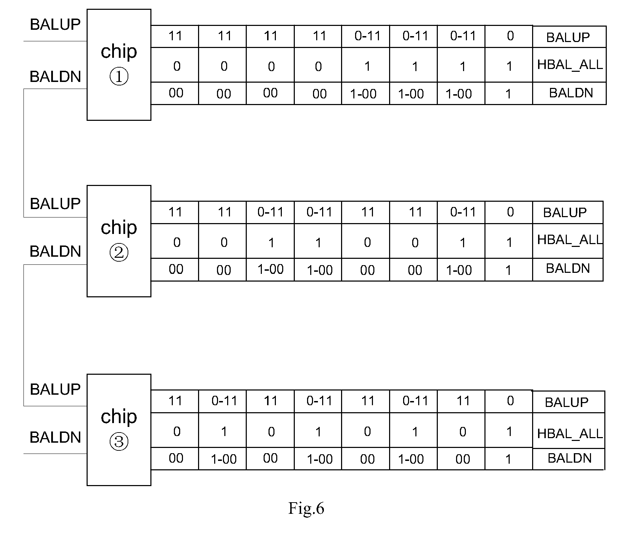

FIG.6 is a schematic diagram showing a logic state of battery protection chips according to an embodiment of the present disclosure. As shown in Fig. 6, for the first end BALUP and the second end BALDN, "11" represents the strong pull up signal, "1" represents the weak pull up signal, "00" represents the strong pull down signal, "0" represent the weak pull down signal, "0-11" represents the weak pull down signal from the first end BALUP is forced to become the strong pull up signal, and "1-00" represents the weak pull up signal from the second end BALDN is forced to become the strong pull down signal; for the balance signal HBAL_ALL, "0" represents the low level signal, and "1" represents the high level signal.

According to another embodiment of the present disclosure, a battery protection chip for protecting a battery pack with a plurality of batteries is provided as well.

As shown in Fig.1, the battery protection chip may comprise a first end BALUP and a second end BALDN. The first end BALUP is configured to output a strong pull up signal when a voltage of at least one battery in a battery pack protected by the battery protection chip does not reach a balance threshold, and to output a weak pull down signal when voltages of all batteries in the battery pack protected by the battery protection chip reach the balance threshold. The second end BALDN is configured to output a strong pull down signal when a voltage of at least one battery in the battery pack protected by the battery protection chip does not reach the balance threshold, and to output a weak pull up signal when voltages of all batteries in the battery pack protected reach the balance threshold. Further, the first end of the battery protection chip is connected to a second end of a second battery protection chip, the second end of the battery protection chip is connected to a first end of a third battery protection chip. When the strong pull down signal is output from the second end of the second battery protection chip and the weak pull down signal is output from the first end of the battery protection chip, the weak pull down signal from the first end of the battery protection chip is forced to become the strong pull up signal; when the strong pull up signal is output from the first end of the third battery protection chip and the weak pull up signal is output from the second end of the battery protection chip, the weak pull up signal from the second end of the battery protection chip is forced to become the strong pull down signal; and when the weak pull up signal is output from the second end of the second battery protection chip and the weak pull down signal is output from the first end of the battery protection chip, the weak pull up signal from the second end of the second battery protection is forced to become the strong pull down signal.

Referring to Fig.2 and Fig.3, the battery protection chip may further comprise a balance signal end 202 configured to receive a balance signal HBAL_ALL. The balance signal HBAL_ALL is a high level signal when voltages of all batteries in the battery pack protected reach the balance threshold, and the balance signal HBAL_ALL is a low level signal when a voltage of at least one battery in a battery pack protected does not reach the balance threshold.

Referring to Fig.2 and Fig.3, in some embodiments, the battery protection chip may comprise a first module 200 and a second module 300. The first module 200 sends a first control signal UP2DN from a first control end 201 to the second module 300; the second module 300 sends a second control signal DN2UP from a second control end 301 to the first module 200.

The first module 200 has the first end BALUP and the balance signal end 202, is configured to control the first end BALUP to output the strong pull up signal based on the second control signal DN2UP when the balance signal end 202 receives the balance signal HBAL_ALL as the low level signal, and is configured to control the first end BALUP to output the weak pull down signal and to control the first control end 201 to output the first control signal UP2DN based on the second control signal DN2UP when the balance signal end 202 receives the balance signal HBAL_ALL as the high level signal.

The second module 300 has the second end BALDN and the balance signal end 202, is configured to control the second end BALDN to output the strong pull down signal based on the first control signal UP2DN when the balance signal end 202 receives the balance signal HBAL_ALL as the low level signal, and is configured to control the second end BALDN to output the weak pull up signal and to control the second control end 301 to output the second control signal DN2UP based on the first control signal UP2DN when the balance signal end 202 receives the balance signal HBAL_ALL as the high level signal, in which the first control signal UP2DN has a different state than the second control signal DN2UP.

Referring to Figs. 2 again, in one embodiment, the first module 200 comprises a first determining unit 210, a level shifting unit 220, a pull-up control unit 230 and a first control unit 240. The first determining unit 210 is configured to generate a first determining signal UP-CT-P based on the second control signal DN2UP and the balance signal HBAL_ALL. The level shifting unit 220 is configured to generate a level shifting signal UP_CT based on the first determining signal UP-CT-P. The pull-up control unit 230 is configured to generate a pull up signal and a third control signal UP based on the level shifting signal UP_CT, in which the pull up signal has a different state than the third control signal UP and the first determining unit 210 is further configured to generate a second determining signal UP_CT_P2 based on the third control signal UP and the first determining signal UP_CT_P. The first control unit 240 is configured to generate the first control signal UP2DN based on the second determining signal UP_CT_P2.

Referring to Fig.3 again, in one embodiment, the second module 300 comprises a second determining unit 310, a pull-down control unit 320 and a second control unit 330. The second
determining unit 310 is configured to generate a third determining signal DN_CT_P based on the first control signal UP2DN and the balance signal HBAL_ALL. The pull-down control unit 320 is configured to generate a pull down signal, a fourth control signal DN1 and a fifth control signal DN2 based on the third determining signal DN_CT_P, and the second determining unit 310 is further configured to generate a fourth determining signal DN_CT_P2 based on the fourth control signal DN1, the fifth control signal DN2 and the third determining signal DN_CT_P. The second control unit 330 is configured to generate the second control signal DN2UP based on the fourth determining signal DN_CT_P2.

Furthermore, with referent to Figs. 2 and 3, it should be understood that when the balance signal HBAL_ALL is the low level signal, the third control signal UP is the low level signal, the fourth control signal DN1 is the low level signal, the fifth control signal DN2 is the high level signal, and the first control signal UP2DN is the high level signal; and when the balance signal HBAL_ALL is the high level signal, the third control signal UP is the high level signal, the fourth control signal DN1 is the low level signal, the fifth control signal DN2 is the low level signal, and the second control signal DN2UP is the low level signal.

Referring to Fig. 4, in some embodiments, the battery protection chip may further comprise a balance determining module 400. The balance determining module 400 is connected to the first control end 201, the second control end 301 and the balance signal end 202 respectively, and is configured to determine whether to start the in-pack balance based on the voltages of the batteries in the battery pack protected by the battery protection chip, and to determine whether to start the inter-pack balance based on the first control signal UP2DN and the second control signal DN2UP.

The battery protection chip according to an embodiment of the present disclosure only has two ends, which may reduce a complexity of packaging battery protection chips as well as reduce packaging cost. In addition, as external ends of the packaged battery protection chip according to the present disclosure are less, it may simplify a connection with other devices such as other battery protection chips, and facilitate a layout on an external PCB.

## Claims

1. A device for controlling a balance of battery protection chips, each battery protection chip protecting a battery pack with a plurality of batteries, the device comprising:
a plurality of battery protection chips connected in series, in which each of the battery protection chips has a first end and a second end, the first end of a first battery protection chip is connected to the second end of a second battery protection chip, the second end of the first battery protection chip is connected to the first end of a third battery protection chip, wherein
when a voltage of at least one battery in a battery pack protected by one battery protection chip of the plurality of battery protection chips does not reach a balance threshold, a strong pull up signal is output from the first end of the one battery protection chip and a strong pull down signal is output from the second end of the one battery protection chip;
when voltages of the plurality of batteries in the battery pack protected by the one battery protection chip of the plurality of battery protection chips reach the balance threshold, a weak pull down signal is output from the first end of the one battery protection chip and a weak pull up signal is output from the second end of the one battery protection chip;
when the strong pull down signal is output from the second end of the second battery protection chip and the weak pull down signal is output from the first end of the first battery protection chip, the weak pull down signal from the first end of the first battery protection chip is forced to become the strong pull up signal;
when the strong pull up signal is output from the first end of the third battery protection chip and the weak pull up signal is output from the second end of the first battery protection chip, the weak pull up signal from the second end of the first battery protection chip is forced to become the strong pull down signal; and
when the weak pull up signal is output from the second end of the second battery protection chip and the weak pull down signal is output from the first end of the first battery protection chip, the weak pull up signal from the second end of the second battery protection is forced to become the strong pull down signal.

2. The device according to claim 1, wherein each of the battery protection chips determines whether to start an in-pack balance based on voltages of batteries in the battery pack protected, and determines whether to start an inter-pack balance based on signals from the first end and the second end thereof.

3. The device according to claim 1 or 2, wherein each battery protection chip has a balance signal end configured to receive a balance signal, in which the balance signal is a high level signal when voltages of the plurality of batteries in the battery pack protected by the each battery protection chip of the plurality of battery protection chips reach the balance threshold, and the balance signal is a low level signal when a voltage of at least one battery in the battery pack protected by the each battery protection chip of the plurality of battery protection chips does not reach the balance threshold.

4. The device according to claim 3 , wherein each battery protection chip comprises a first module and a second module, the first module sends a first control signal from a first control end to the second module, the second module sends a second control signal from a second control end to the first module,
the first module has the first end and the balance signal end, is configured to control the first end to output the strong pull up signal based on the second control signal when the balance signal end receives the balance signal as the low level signal, and is configured to control the first end to output the weak pull down signal and to control the first control end to output the first control signal based on the second control signal when the balance signal end receives the balance signal as the high level signal;
the second module has the second end and the balance signal end, is configured to control the second end to output the strong pull down signal based on the first control signal when the balance signal end receives the balance signal as the low level signal, and is configured to control the second end to output the weak pull up signal and to control the second control end to output the second control signal based on the first control signal when the balance signal end receives the balance signal as the high level signal, in which the first control signal has a different state than the second control signal.

5. The device according to claim 4, wherein the first module comprises:
a first determining unit, configured to generate a first determining signal based on the second control signal and the balance signal;
a level shifting unit, configured to generate a level shifting signal based on the first determining signal;
a pull-up control unit, configured to generate a pull up signal and a third control signal based on the level shifting signal, in which the pull up signal has a different state than the third control signal and the first determining unit further configured to generate a second determining signal based on the third control signal and the first determining signal; and
a first control unit, configured to generate the first control signal based on the second determining signal.

6. The device according to claim 4 or 5, wherein the second module comprises:
a second determining unit, configured to generate a third determining signal based on the first control signal and the balance signal;
a pull-down control unit, configured to generate a pull down signal, a fourth control signal and a fifth control signal based on the third determining signal, and the second determining unit further configured to generate a fourth determining signal based on the fourth control signal, the fifth control signal and the third determining signal; and
a second control unit, configured to generate the second control signal based on the fourth determining signal.

7. The device according to claim 6, wherein
when the balance signal is the low level signal, the third control signal is the low level signal, the fourth control signal is the low level signal, the fifth control signal is the high level signal and the first control signal is the high level signal; and
when the balance signal is the high level signal, the third control signal is the high level signal, the fourth control signal is the low level signal, the fifth control signal is the low level signal, and the second control signal is the low level signal.

8. The device according to any one of claims 4-7, wherein each battery protection chip further comprises:
a balance determining module, connected to the first control end, the second control end and the balance signal end respectively, configured to determine whether to start the in-pack balance based on the voltages of the batteries in the battery pack protected by the each battery protection chip, and to determine whether to start the inter-pack balance based on the first control signal and the second control signal.

## Patentansprüche

1. Vorrichtung zum Steuern eines Abgleichs von Batterieschutzchips, wobei jeder Batterieschutzchip eine Batteriebaugruppe mit mehreren Batterien schützt, wobei die Vorrichtung Folgendes enthält:
mehrere Batterieschutzchips, die in Reihe geschaltet sind, wobei jeder der Batterieschutzchips ein erstes und ein zweites Ende aufweist, wobei das erste Ende eines ersten Batterieschutzchips mit dem zweiten Ende eines zweiten Batterieschutzchips verbunden ist, wobei das zweite Ende des ersten Batterieschutzchips mit dem ersten Ende eines dritten Batterieschutzchips verbunden ist, wobei,
dann, wenn eine Spannung von mindestens einer Batterie in einer Batteriebaugruppe, die durch einen Batterieschutzchip der mehreren Batterieschutzchips geschützt wird, einen Abgleichschwellenwert nicht erreicht, vom ersten Ende des einen Batterieschutzchips ein starkes Pull-Up-Signal ausgegeben wird und vom zweiten Ende des einen Batterieschutzchips ein starkes Pull-Down-Signal ausgegeben wird;
dann, wenn die Spannungen der mehreren Batterien in der Batteriebaugruppe, die durch den einen Batterieschutzchip der mehreren Batterieschutzchips geschützt wird, den Abgleichschwellenwert erreichen, vom ersten Ende des einen Batterieschutzchips ein schwaches Pull-Down-Signal ausgegeben wird und vom zweiten Ende des einen Batterieschutzchips ein schwaches Pull-Up-Signal ausgegeben wird;
dann, wenn das starke Pull-Down-Signal vom zweiten Ende des zweiten Batterieschutzchips ausgegeben wird und das schwache Pull-Down-Signal vom ersten Ende des ersten Batterieschutzchips ausgegeben wird, erzwungen wird, dass das schwache Pull-Down-Signal vom ersten Ende des ersten Batterieschutzchips das starke Pull-Up-Signal wird;
dann, wenn das starke Pull-Up-Signal vom ersten Ende des dritten Batterieschutzchips ausgegeben wird und das schwache Pull-Up-Signal vom zweiten Ende des ersten Batterieschutzchips ausgegeben wird, erzwungen wird, dass das schwache Pull-Up-Signal vom zweiten Ende des ersten Batterieschutzchips das starke Pull-Down-Signal wird; und
dann, wenn das schwache Pull-Up-Signal vom zweiten Ende des zweiten Batterieschutzchips ausgegeben wird und das schwache Pull-Down-Signal vom ersten Ende des ersten Batterieschutzchips ausgegeben wird, erzwungen wird, dass das schwache Pull-Up-Signal vom zweiten Ende des zweiten Batterieschutzchips das starke Pull-Down-Signal wird.

2. Vorrichtung nach Anspruch 1, wobei jeder der Batterieschutzchips auf der Basis der Spannungen in der geschützten Batteriebaugruppe bestimmt, ob ein batteriebaugruppeninterner Abgleich zu starten ist, und auf der Basis der Signale von seinem ersten Ende und von seinem zweiten Ende bestimmt, ob ein batteriebaugruppeninterner Abgleich zu starten ist.

3. Vorrichtung nach Anspruch 1 oder 2, wobei jeder Batterieschutzchip ein Abgleichsignalende aufweist, das konfiguriert ist, ein Abgleichsignal zu empfangen, wobei das Abgleichsignal ein Hochpegelsignal ist, wenn die Spannungen der mehreren Batterien in der Batteriebaugruppe, die von dem jeweiligen Batterieschutzchip der mehreren Batterieschutzchips geschützt wird, den Abgleichschwellenwert erreichen, und das Abgleichsignal ein Niedrigpegelsignal ist, wenn eine Spannung von mindestens einer Batterie in der Batteriebaugruppe, die von dem jeweiligen Batterieschutzchip der mehreren Batterieschutzchips geschützt wird, den Abgleichschwellenwert nicht erreicht.

4. Vorrichtung nach Anspruch 3, wobei jeder Batterieschutzchip ein erstes Modul und ein zweites Modul enthält, wobei das erste Modul von einem ersten Steuerende ein erstes Steuersignal an das zweite Modul sendet, wobei das zweite Modul von einem zweiten Steuerende ein zweites Steuersignal an das erste Modul sendet,
wobei das erste Modul das erste Ende und das Abgleichsignalende aufweist, konfiguriert ist, auf der Basis des zweiten Steuersignals das erste Ende derart zu steuern, dass es das starke Pull-Up-Signal ausgibt, wenn das Abgleichsignalende das Abgleichsignal als das Niedrigpegelsignal empfängt, und konfiguriert ist, auf der Basis des zweiten Steuersignals das erste Ende derart zu steuern, dass es das schwache Pull-Down-Signal ausgibt, und das erste Steuerende derart zu steuern, dass es das erste Steuersignal ausgibt, wenn das Abgleichsignalende das Abgleichsignal als das Hochpegelsignal empfängt;
wobei das zweite Modul das zweite Ende und das Abgleichsignalende aufweist, konfiguriert ist, auf der Basis des ersten Steuersignals das zweite Ende derart zu steuern, dass es das starke Pull-Down-Signal ausgibt, wenn das Abgleichsignalende das Abgleichsignal als das Niedrigpegelsignal empfängt, und konfiguriert ist, auf der Basis des ersten Steuersignals das zweite Ende derart zu steuern, dass es das schwache Pull-Up-Signal ausgibt, und das zweite Steuerende derart zu steuern, dass es das zweite Steuersignal ausgibt, wenn das Abgleichsignalende das Abgleichsignal als ein Hochpegelsignal empfängt, wobei das erste Steuersignal einen vom zweiten Steuersignal verschiedenen Zustand aufweist.

5. Vorrichtung nach Anspruch 4, wobei das erste Modul Folgendes enthält:
eine erste Bestimmungseinheit, die konfiguriert ist, auf der Basis des zweiten Steuersignals und des Abgleichsignals ein erstes Bestimmungssignal zu erzeugen;
eine Pegelverschiebungseinheit, die konfiguriert ist, auf der Basis des ersten Bestimmungssignals ein Pegelverschiebungssignal zu erzeugen;
eine Pull-Up-Steuereinheit, die konfiguriert ist, auf der Basis des Pegelverschiebungssignals ein Pull-Up-Signal und ein drittes Steuersignal zu erzeugen, wobei das Pull-Up-Signal einen von dem dritten Steuersignal verschiedenen Zustand aufweist und die erste Bestimmungseinheit ferner konfiguriert ist, auf der Basis des dritten Steuersignals und des ersten Bestimmungssignals ein zweites Bestimmungssignal zu erzeugen; und
eine erste Steuereinheit, die konfiguriert ist, auf der Basis des zweiten Bestimmungssignals das erste Steuersignal zu erzeugen.

6. Vorrichtung nach Anspruch 4 oder 5, wobei das zweite Modul Folgendes umfasst:
eine zweite Bestimmungseinheit, die konfiguriert ist, auf der Basis des ersten Steuersignals und des Abgleichsignals ein drittes Bestimmungssignal zu erzeugen;
eine Pull-Down-Steuereinheit, die konfiguriert ist, auf der Basis des dritten Bestimmungssignals ein Pull-Down-Signal, ein viertes Steuersignal und ein fünftes Steuersignal zu erzeugen, wobei die zweite Bestimmungseinheit ferner konfiguriert ist, auf der Basis des vierten Steuersignals, des fünften Steuersignals und des dritten Bestimmungssignals ein viertes Bestimmungssignal zu erzeugen; und
eine zweite Steuereinheit, die konfiguriert ist, auf der Basis des vierten Bestimmungssignals das zweite Steuersignal zu erzeugen.

7. Vorrichtung nach Anspruch 6, wobei
dann, wenn das Abgleichsignal das Niedrigpegelsignal ist, das dritte Steuersignal das Niedrigpegelsignal ist, das vierte Steuersignal das Niedrigpegelsignal ist, das fünfte Steuersignal das Hochpegelsignal ist und das erste Steuersignal das Hochpegelsignal ist; und
dann, wenn das Abgleichsignal das Hochpegelsignal ist, das dritte Steuersignal das Hochpegelsignal ist, das vierte Steuersignal das Niedrigpegelsignal ist, das fünfte Steuersignal das Niedrigpegelsignal ist und das zweite Steuersignal das Niedrigpegelsignal ist.

8. Vorrichtung nach einem der Ansprüche 4-7, wobei jeder Batterieschutzchip ferner Folgendes enthält:
ein Abgleichbestimmungsmodul, das jeweils mit dem ersten Steuerende, mit dem zweiten Steuerende und mit dem Abgleichsignalende verbunden ist, das konfiguriert ist, auf der Basis der Spannungen der Batterien in der Batteriebaugruppe, die von dem jeweiligen Batterieschutzchip geschützt wird, zu bestimmen, ob der batteriebaugruppeninterne Abgleich zu starten ist, und auf der Basis des ersten Steuersignals und des zweiten Steuersignals zu bestimmen, ob der batteriebaugruppeninterne Abgleich zu starten ist.

## Revendications

1. Dispositif destiné à commander un équilibrage de puces de protection de batteries, chaque puce de protection de batteries protégeant un bloc de batteries ayant une pluralité de batteries, le dispositif comportant :
une pluralité de puces de protection de batteries raccordées en série, dans laquelle chacune des puces de protection de batteries a une première extrémité et une seconde extrémité, la première extrémité d'une première puce de protection de batteries est reliée à la seconde extrémité d'une deuxième puce de protection de batteries, la seconde extrémité de la première puce de protection de batteries est reliée à la première extrémité d'une troisième puce de protection de batteries, dans lequel
lorsqu'une tension d'au moins une batterie dans un bloc de batterie protégé par une puce de protection de batteries de la pluralité de puces de protection de batteries n'atteint pas un seuil d'équilibrage, un signal fort d'excursion haute est délivré à partir de la première extrémité de la puce de protection de batteries et un signal fort d'excursion basse est délivré à partir de la seconde extrémité de la puce de protection de batteries ;
lorsque des tensions de la pluralité de batteries dans le bloc de batteries protégé par la puce de protection de batteries de la pluralité de puces de protection de batteries atteignent le seuil d'équilibrage, un signal faible d'excursion basse est délivré à partir de la première extrémité de la puce de protection de batteries et un signal faible d'excursion haute est délivré à partir de la seconde extrémité de la puce de protection de batteries ;
lorsque le signal fort d'excursion basse est délivré à partir de la seconde extrémité de la deuxième puce de protection de batteries et que le signal faible d'excursion basse est délivré à partir de la première extrémité de la première puce de protection de batteries, le signal faible d'excursion basse provenant de la première extrémité de la première puce de protection de batteries est forcé à devenir le signal fort d'excursion haute ;
lorsque le signal fort d'excursion haute est délivré à partir de la première extrémité de la troisième puce de protection de batteries et que le signal faible d'excursion haute est délivré à partir de la seconde extrémité de la première puce de protection de batteries, le signal faible d'excursion haute provenant de la seconde extrémité de la première puce de protection de batteries est forcé à devenir le signal fort d'excursion basse ; et
lorsque le signal faible d'excursion haute est délivré à partir de la seconde extrémité de la deuxième puce de protection de batteries et que le signal faible d'excursion basse est délivré à partir de la première extrémité de la première puce de protection de batteries, le signal faible d'excursion haute provenant de la seconde extrémité de la deuxième puce de protection de batteries est forcé à devenir le signal fort d'excursion basse.

2. Dispositif selon la revendication 1, dans lequel chacune des puces de protection de batteries détermine s'il faut démarrer un équilibrage dans le bloc sur la base des tensions de batterie dans le bloc de batteries protégé, et détermine s'il faut démarrer un équilibrage entre batteries sur la base de signaux provenant de la première extrémité et de la seconde extrémité de celles-ci.

3. Dispositif selon la revendication 1 ou 2, dans lequel chaque puce de protection de batteries a une extrémité de signal d'équilibrage configurée pour recevoir un signal d'équilibrage, dans lequel le signal d'équilibrage est un signal de niveau haut lorsque des tensions de la pluralité de batteries dans le bloc de batteries protégé par chaque puce de protection de batteries de la pluralité de puces de protection de batteries atteignent le seuil d'équilibrage, et le signal d'équilibrage est un signal de niveau bas lorsqu'une tension d'au moins une batterie dans le bloc de batteries protégé par chaque puce de protection de batteries de la pluralité de puces de protection de batteries n'atteint pas le seuil d'équilibrage.

4. Dispositif selon la revendication 3, dans lequel chaque puce de protection de batteries comporte un premier module et un second module, le premier module envoie au second module un premier signal de commande à partir d'une première extrémité de commande, le second module envoie au premier module un deuxième signal de commande à partir d'une seconde extrémité de commande,
le premier module a la première extrémité et l'extrémité de signal d'équilibrage est configurée pour commander la première extrémité de manière à délivrer le signal fort d'excursion haute basé sur le deuxième signal de commande lorsque l'extrémité de signal d'équilibrage reçoit le signal d'équilibrage en tant que signal de niveau bas, et est configurée pour commander la première extrémité de manière à délivrer le signal faible d'excursion basse et pour commander la première extrémité de commande de manière à délivrer le premier signal de commande basé sur le deuxième signal de commande lorsque l'extrémité de signal d'équilibrage reçoit le signal d'équilibrage en tant que signal de niveau haut ;
le second module a la seconde extrémité et l'extrémité de signal d'équilibrage est configurée pour commander la seconde extrémité de manière à délivrer le signal fort d'excursion basse basé sur le premier signal de commande lorsque l'extrémité de signal d'équilibrage reçoit le signal d'équilibrage en tant que signal de niveau bas, et est configurée pour commander la seconde extrémité de manière à délivrer le signal faible d'excursion haute et pour commander la seconde extrémité de commande de manière à délivrer le deuxième signal de commande basé sur le premier signal de commande lorsque l'extrémité de signal d'équilibrage reçoit le signal d'équilibrage en tant que signal de niveau haut, dans lequel le premier signal de commande a un état différent du deuxième signal de commande.

5. Dispositif selon la revendication 4, dans lequel le premier module comporte :
une première unité de détermination, configurée pour générer un premier signal de détermination basé sur le deuxième signal de commande et le signal d'équilibrage ;
une unité de changement de niveau, configurée pour générer un signal de changement de niveau basé sur le premier signal de détermination ;
une unité de commande d'excursion haute, configurée pour générer un signal d'excursion haute et un troisième signal de commande basé sur le signal de changement de niveau,
dans lequel le signal d'excursion haute a un état différent du troisième signal de commande et la première unité de détermination est en outre configurée pour générer un deuxième signal de détermination basé sur le troisième signal de commande et le premier signal de détermination ; et
une première unité de commande, configurée pour générer le premier signal de commande basé sur le deuxième signal de détermination.

6. Dispositif selon la revendication 4 ou 5, dans lequel le second module comporte :
une seconde unité de détermination, configurée pour générer un troisième signal de détermination basé sur le premier signal de commande et le signal d'équilibrage ;
une unité de commande d'excursion basse, configurée pour générer un signal d'excursion basse, un quatrième signal de commande et un cinquième signal de commande basés sur le troisième signal de détermination, et la deuxième unité de détermination est en outre configurée pour générer un quatrième signal de détermination basé sur le quatrième signal de commande, le cinquième signal de commande et le troisième signal de détermination ; et
une seconde unité de commande, configurée pour générer le deuxième signal de commande basé sur le quatrième signal de détermination.

7. Dispositif selon la revendication 6, dans lequel lorsque le signal d'équilibrage est le signal de niveau bas, le troisième signal de commande est le signal de niveau bas, le quatrième signal de commande est le signal de niveau bas, le cinquième signal de commande est le signal de niveau haut et le premier signal de commande est le signal de niveau haut ; et
lorsque le signal d'équilibrage est le signal de niveau haut, le troisième signal de commande est le signal de niveau haut, le quatrième signal de commande est le signal de niveau bas, le cinquième signal de commande est le signal de niveau bas, et le deuxième signal de commande est le signal de niveau bas.

8. Dispositif selon l'une quelconque des revendications 4 à 7, dans lequel chaque puce de protection de batteries comporte en outre :
un module de détermination d'équilibrage, relié à la première extrémité de commande, à la seconde extrémité de commande et à l'extrémité de signal d'équilibrage respectivement, configuré pour déterminer s'il faut démarrer l'équilibrage dans le bloc sur la base des tensions des batteries dans le bloc de batteries protégé par chaque puce de protection de batteries, et pour déterminer s'il faut démarrer l'équilibrage entre batteries sur la base du premier signal de commande et du deuxième signal de commande.
